Europäisches Patentamt

European Patent Office

Office européen des brevets

(11) Veröffentlichungsnummer: **0 186 755**
**A2**

(12) **EUROPÄISCHE PATENTANMELDUNG**

(21) Anmeldenummer: 85114118.4

(22) Anmeldetag: 06.11.85

(51) Int. Cl.⁴: **G 01 N 21/05**

(30) Priorität: 26.11.84  CH 5632/84

(43) Veröffentlichungstag der Anmeldung: 09.07.86
Patentblatt 86/28

(84) Benannte Vertragsstaaten: **CH DE FR GB LI NL**

(71) Anmelder: **KONTRON-HOLDING AG, Bernerstrasse Süd 169, CH-8048 Zürich (CH)**

(72) Erfinder: **Wiget, Peter, Dr., Dorfhaldenweg 7, CH-6403 Küssnacht (CH)**

(74) Vertreter: **Buntz, Gerhard et al, Grenzacherstrasse 124 Postfach 3255, CH-4002 Basel (CH)**

(54) **Durchflusszelle.**

(57) Durchflußzelle für die Hochleistungschromatographie bei der die Meßkammer durch eine Bohrung (12) in einer Platte (11) und die Zu- und Ableitungskanäle durch Bohrungen (13, 14) in der Platte (11) in Verbindung mit Nuten (16, 18) in den Plattenoberflächen (15, 17) gebildet werden, wobei die Nuten durch auf den Plattenoberflächen angesprengte lichtdurchlässige Platten (19, 20) abgedeckt sind und so geschlossene Kanäle bilden.

ACTORUM AG

Kontron Holding AG, Bernerstrasse Süd 169, 8048 Zürich

0186755

Durchflusszelle

Die Erfindung betrifft eine Durchflusszelle mit einer auf einander gegenüberliegenden Seiten von optischen Fenstern begrenzten Messkammer und Verbindungskanälen mit äusseren Anschlüssen für die Zu- und Ableitung der zu messenden Flüssigkeit.

Unter Durchflusszellen oder -küvetten werden im Rahmen dieser Beschreibung Einrichtungen zur Messung optischer Eigenschaften von kontinuierlich strömenden Flüssigkeiten verstanden, die im wesentlichen einen Innenraum aufweisen, der auf einander gegenüberliegenden Seiten durch optische Fenster begrenzt ist und in dem die durch geeignete Auschlüsse zu- und abgeleitete Flüssigkeit einer Messtrahlung ausgesetzt wird. Es gibt eine Vielzahl von Vorschlägen für solche Durchflusszellen für unterschiedliche Einsatzbereiche.

Bei der Hochleistungschromatographie (HPLC) werden in den Detektoren, üblicherweise Fluoreszenz- oder Absorptionsmessgeräte, Durchflusszellen eingesetzt, die extremen Anforderungen genügen müssen. Sie müssen hohe Drücke bis 400 bar aushalten, einen hohen thermischen Widerstand haben, widerstandsfähig sein gegen agressive

Bu/21.10.85

bzw. korrosive Lösungsmittel und volle Lichtdurchlässigkeit im UV- und sichtbaren Bereich sowie möglichst geringe Toträume aufweisen.

Ein Hauptproblem bildeten bisher die Dichtungen, die meist aus dem unter der Bezeichnung TEFLON bekannten Polytetrafluoräthylen bestehen, einem Material das diesen Anforderungen zwar weitestgehend, aber doch nicht völlig genügt.

Vor allem das Problem der Toträume war bisher nicht optimal gelöst. Toträume führen zur Rückmischung und müssen daher im Verhältnis zum Zellvolumen vernachlässigbar klein sein. Ihr Vorhandensein limitiert die möglichen Zellvolumina nach unten.

Bei der Verwendung eines Durchflusskörpers aus einem Material mit kleinem termischen Widerstand besteht zudem das Problem, dass auf Grund von thermischen Instabilitäten zwischen der pulsierenden Flüssigkeit und den metallischen Zellwänden Brechungsindex-Schwankungen entstehen, welche schliesslich störende Schwankungen (Rauschen) des Messsignals ergeben.

Der Erfindung liegt daher die Aufgabe zugrunde eine Durchflusszelle bereitzustellen, die den vorgenannten Anforderungen genügt und im besonderen wesentlich kleinere Toträume aufweist als bekannte Durchflusszellen.

Erfindungsgemäss wird diese Aufgabe gelöst durch eine Durchflusszelle der eingangs erwähnten Art, bei der die Messkammer durch eine Bohrung in einer mit plangeschliffenen und polierten Flächen versehenen innerten Platte und beiseitig an der inneren Platte angesprengten äusseren Platten begrenzt ist und die Verbindungskanäle mindestens teilweise aus durch die äusseren Platten abgedeckten Nuten in den Flächen der inneren Platte bestehen, wobei die Platten aus einem ansprenbaren Material bestehen und die äusseren Platten lichtdurchlässig sind.

Im folgenden sind unter Bezugnahme auf die beiliegenden Zeichnungen Ausführungsbeispiele der Erfindung beschrieben. Es zeigen:

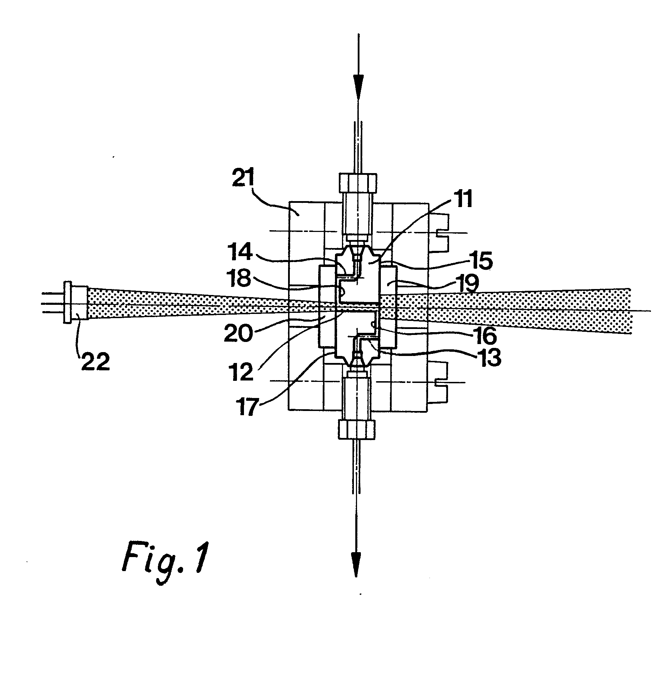

Fig. 1 eine Durchflusszelle für eine HPLC-Apparatur in schematischer Darstellung.

Fig. 2 eine weitere Ausführungsform der Durchflusszelle.

Eine Platte 11 weist eine zentrale durchgehende Bohrung 12 auf, die das Messvolumen bzw. die Messkammer der Durchflusszelle darstellt. Die Länge der Bohrung 12 ist gleich der Plattendicke und stellt die Schichtdicke der zu messenden Flüssigkeitsprobe dar.

Eine zweite, um 90° abgewinkelte Bohrung 13 verläuft von einer Plattenfläche 15 zunächst parallel zur zentralen Bohrung 12 und dann senkrecht dazu zu einer Stirnseite der Platte 11. In gleichem Abstand von der zentralen Bohrung 12 nach der anderen Seite verläuft eine weitere abgewinkelte Bohrung 14 von der zweiten Plattenfläche 17 zur gegenüberliegenden Stirnseite.

In der einen Plattenfläche 15 verläuft eine Nut 16 zwischen der zentralen Bohrung 12 und der einen seitlichen Bohrung 13, in der anderen Plattenfläche 17 eine ebensolche Nut 18 zwischen der zentralen Bohrung 12 und der anderen seitlichen Bohrung 14.

Die beiden Plattenflächen 15, 17 sind plan geschliffen und poliert.

Die eine Plattenfläche 15 grenzt an eine ebenfalls plan geschliffene und polierte Fläche einer weiteren Platte 19, die kleiner ist als die Platte 11, die aber den Bereich der Plattenfläche 15 bedeckt, in dem die Nut 16 verläuft.

Die andere Fläche 17 der Platte 11 grenzt an eine ebenso beschaffene und angeordnete Platte 20. Durch die beiden äusseren Platten 19, 20 werden die Nuten 16 und 18 zu geschlossenen Kanälen. Zusammen mit den drei Bohrungen bilden sie somit insgesamt einen S-förmigen Kanal, durch den das zu analysierende Medium strömt. Für den Anschluss an die Zu- und Abflussleitungen sind die beiden äusseren Bohrungen 13, 14 dort, wo sie an den Stirnseiten der Platte 11 münden, so aufgebohrt, dass Rohre mit Ferrule-Dichtungen eingesetzt werden können.

Das Besondere ist nun, dass zwischen den Platten 11 und 19 bzw. 20 keine Dichtung notwendig ist. Voraussetzung dafür ist, dass die Flächen 15 und 17, sowie die anliegenden Flächen der Platten 19 und 20 so plan und glatt geschliffen und poliert sind, dass sie durch den von der Fertigung optischer Linsen her bekannten Ansprengeffekt aneinander haften und nur durch erhebliche Kraftanwendung wieder voneinander getrennt werden können. Derart angesprengte Platten weisen keinen Luftspalt zwischen sich auf und sind daher auch für Flüssigkeiten dicht. Anwendungen mit hohem Flüssigkeitsdruck (>50 bar) sind ebenfalls problemlos möglich, wobei aber in diesen Fällen die beiden äusseren Platten (19, 20) mittels einer mechanischen Vorspannung an die mittlere Platte 11 angepresst werden müssen.

Das seitliche Verschieben angesprengter Flächen gegeneinander ist bekanntlich leicht möglich. Zur Fixierung der Platten 11, 19, 20 gegen seitliches Verschieben, zur Anbringung der Anschlüsse, sowie zum Anpressen bei höherem Innendruck ist eine Halterung 21 vorgesehen, in der die

0186755

Platten durch Verschraubung oder dgl. unter einer gewissen Spannung gehalten werden.

Der Lichtweg führt parallel zur Achse der mittleren Bohrung 12 durch die Platten 19 und 20 hindurch. Die Platten 19 und 20 müssen daher lichtdurchlässig sein, d.h. beispielsweise aus Glas, Quarz, Saphir, etc. Die Platte 11 kann aus dem gleichen oder aus einem undurchsichtigen Material, wie z.B. Keramik, etc. sein. In jedem Fall muss es sich jedoch um ein Material handeln, dessen Oberfläche durch Bearbeitung die für das Ansprengen erforderliche Qualität erhält. Für die meisten Werkstoffe, insbesondere die meisten Metalle, ist dies nicht der Fall.

In den Platten der Halterung 21 sind für den Strahlendurchgang mit der mittleren Bohrung 13 konzentrische Bohrungen vorgesehen.

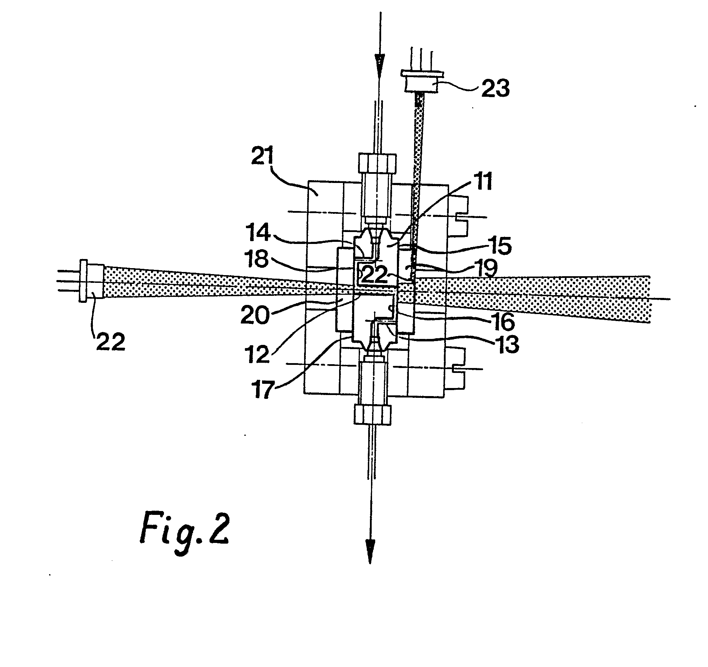

In Fig. 2 ist eine Ausführungsform gezeigt, die im wesentlichen gleich aufgebaut ist wie die vorstehend beschriebene Zelle. Im Unterschied zu ihr besitzt aber die Platte 19 auf der Lichteinfallseite eine angeschliffene Schrägfläche 22 im Strahlenbereich. Durch sie wird ein Teil des Strahls zu einem Referenzdetektor 23 umgelenkt.

Patentansprüche

1. Durchflusszelle mit einer auf einander gegenüberliegenden Seiten von optischen Fenstern begrenzten Messkammer und Verbindungskanälen mit äusseren Anschlüssen für die Zu- und Ableitung der zu messenden Flüssigkeit, dadurch gekennzeichnet, dass die Messkammer durch eine Bohrung in einer mit plangeschliffenen und polierten Flächen (15,17) versehenen inneren Platte (11) und beidseitig an der inneren Platte angesprengten äusseren Platten (19,20) begrenzt ist und die Verbindungskanäle mindestens teilweise aus durch die äusseren Platten abgedeckten Nuten (16,18) in den Flächen der inneren Platte bestehen, wobei die Platten aus einem ansprengbaren Material bestehen und die äusseren Platten lichtdurchlässig sind.

2. Durchflusszelle nach Anspruch 1, dadurch gekennzeichnet, dass das Material der Platten Glas, Quarz oder Saphir ist.

3. Durchflusszelle nach Anspruch 1, dadurch gekennzeichnet, dass das Material für die innere Platte Keramik ist.

4. Durchflusszelle nach Anspruch 1, dadurch gekennzeichnet, dass die auf der Lichteinfallseite gelegene Platte (19) eine angeschliffene Schrägfläche aufweist, durch die ein Teil des Lichtstrahls umgelenkt wird.

Fig. 1

2/2

Fig.2